## Europäisches Patentamt

## European Patent Office

## Office européen des brevets

(11) Publication number: **0 058 037 B1**

(12) **EUROPEAN PATENT SPECIFICATION**

(45) Date of publication of patent specification: **18.03.87**

(51) Int. Cl.⁴: **G 05 D 13/62, F 16 H 47/02**

(21) Application number: **82300523.6**

(22) Date of filing: **02.02.82**

(54) **Apparatus for producing a constant rotational speed from a variable speed input.**

(30) Priority: **11.02.81 GB 8104286**

(43) Date of publication of application:
**18.08.82 Bulletin 82/33**

(45) Publication of the grant of the patent:
**18.03.87 Bulletin 87/12**

(84) Designated Contracting States:
**AT BE CH DE FR GB IT LI LU NL SE**

(56) References cited:
**DE-A-1 956 930**
**DE-A-2 160 054**
**DE-A-2 726 804**
**DE-A-3 005 561**
**DE-B-2 601 751**
**GB-A-1 563 698**
**US-A-3 298 251**

(73) Proprietor: **Vickers Shipbuilding & Engineering Limited**
**Barrow Engineering Works P.O. Box 12**
**Barrow-in-Furness Cumbria LA14 1AF (GB)**

(72) Inventor: **Murrell, Peter William**
**8 Dane Avenue**
**Barrow-in-Furness Cumbria (GB)**
Inventor: **Calverley, John**
**31 Leece Lane Roose**
**Barrow-in-Furness Cumbria (GB)**
Inventor: **Williams, Donald**
**Brynfa Maesmawr Rhayader**
**Powys Wales (GB)**
Inventor: **Thomas, Douglas James**
**67 Brynheulog**
**Rhayader Powys Wales (GB)**

(74) Representative: **Orr, William McLean et al**
**Haseltine Lake & Co Hazlitt House 28**
**Southampton Buildings Chancery Lane**
**London WC2A 1AT (GB)**

Courier Press, Leamington Spa, England.

**Description**

This invention relates to apparatus for producing a constant rotational output speed from a variable speed input.

One example of an application for apparatus according to the invention is in the generation of alternating current electricity from a power source which provides a variable speed output, such as a marine prime mover, or wind or water-powered devices.

If the speed of an AC generator varies, the frequency of the current produced will also vary, causing problems with some electrical equipment. For example, clocks will not keep correct time, and AC motors will run at variable speeds. Similarly, if a DC generator is used, the voltage of the current produced will also vary.

The present invention has been developed primarily, though not exclusively, with a view to providing apparatus which can produce a constant speed output drive, from a power source which supplies an input to the apparatus at a speed which may fluctuate, for the purposes of electrical power generation. However, it should be understood that the apparatus may have application in other situations in which a constant speed output drive is necessary.

The generation of electrical power on board a ship can be derived from the prime mover of the ship, when it is not in port, since this is more economical than to operate a secondary auxiliary engine. However, a disadvantage of using the prime mover is that its speed, and that of the drive train, from the prime mover to an AC generator, may vary depending upon external factors e.g. if the ship is sailing through a storm. When a ship is crusiing at a nominally constant speed, it might be expected the ship's engine(s) and propeller(s) would be rotating at a constant speed, but this is not always the case. Factors such as the roll of the ship, wave motion, changes in local water temperature and density, for example, can lead to a surprisingly large and random variation in the propeller speed. Thus, if a powered generator is driven via the prime mover drive train, any variation of the speed of rotation of the propeller shaft will be magnified by the gear ratio of a take-off drive to the generator, so that the rotational speed of the generator will vary through a greater magnitude speed range. In modern ships, alternating current power is generally used, so that, if the speed of the A.C. generator varies, the current produced will have a variable frequency.

It has become common practice to electronically rectify the variable frequency to stabilise the frequency of the variable current produced from shaft driven generators, but for a large ship with a power requirement of between 0.5 and 1 MW, the physical size of the electronic equipment and the associated power loss pose severe problems for ship designers and operators.

Also, the generation of electrical power from natural sources, such as air or wind-driven devices, or water driven devices, e.g. turbines driven by tidal or other currents and devices arranged to extract energy from wave motion, usually suffers from the common disadvantage of fluctuation in the output speed of the device.

Accordingly, there has developed a need to provide apparatus which can operate devices which require power at a substantially constant rotational speed, when the apparatus is supplied with power from a power source which provides an input to the apparatus at a speed which is liable to fluctuate substantially in service.

It is known from US 3,298,251 to provide an electrical generator drive which is intended specifically for use with a turbojet engine. An input shaft takes power from a turbojet engine, and an output shaft receives power from the input shaft via a differential gear unit. A hydraulic governor unit is coupled with the output shaft and serves to maintain a substantially constant speed thereof, by controlling the transmission ratio of the differential gear unit by controlling the setting of a variable displacement hydraulic rotary machine coupled with the differential gear unit. An A.C. generator is coupled with the output shaft, and the drive train is arranged to respond automatically to variation in speed of the ouput shaft so as to obtain a substantially constant input speed to the A.C. generator.

However, the known arrangement provides a controlled drive transmission for an electrical generator from a power source (a turbojet engine) which will normally provide input power at a substantially constant speed, or in which the speed will vary only gradually following operation of the throttle of the engine. The known arrangement can therefore respond satisfactorily to gradual changes of input rotation from a power source, but cannot respond readily to abrupt changes in input speed. Furthermore, the known arrangement does not incorporate any damping means for absorbing the effect on the transmission unit of any sudden changes of input speed.

According to the invention there is provided an electrical generator drive comprising a power source to transmit power at a rotational speed which may fluctuate substantially in service, an electrical generator which requires a rotational input of power at a substantially constant speed, and a controllable drive transmission coupling together the power source and the electrical generator, said drive transmission comprising:

an epicyclic gear having an input member which is arranged to be driven by said power source, an output member coupled with said electrical generator, and a reaction member;

monitoring means arranged to respond to fluctuations from a predetermined value in the rotational speed of the output member;

and control means including a hydraulic pump/motor unit coupled with said reaction member and controllable by the monitoring means in order to vary the relative rotation between the reaction member and the other members of the epicyclic gear so as to maintain a substantially constant predetermined speed of the output member; characterised in that:

the monitoring means includes a control unit having a memory storable with a predetermined value corresponding to the predetermined speed of the output member, means for feeding to the control unit an input signal which represents the actual speed of the output member and which the control unit compares with the predetermined value in order to determine whether a fluctuation has occurred from the required predetermined speed of the output member, and a control line from the control unit to said pump/motor unit via which the control unit controls the operation of the pump/motor unit to cause alteration in the relative rotation of the reaction member, when a fluctuation occurs in the speed of the output member, and so as to restore the speed of the output member to the predetermined speed; and

the drive transmission also includes at least one flexible coupling for torsionally absorbing at least part of any speed fluctuation imparted to the drive transmission via the power source and the input member.

An electrical generator drive according to the invention may be operated by any convenient power source. Thus, when the generator drive is intended to be used onboard ship, the prime mover of the ship may be used as the power source. However, other power sources may be employed, including air or wind driven devices, or water driven devices.

When the generator drive is intended for use onboard ship, substantially constant frequency electrical power can be obtained by driving a marine generator from the output member of the epicyclic gear. Marine generators usually run at either 1200 or 1800 r.p.m., in order to generate 60 Hz electricity, in which case it is preferable to provide a variable ratio step-up drive when the ship is powered by a diesel engine. However, if the prime mover for the ship is a turbine, a variable ratio step-down drive could be more appropriate. When the electrical generator drive is intended for use in generating electricity from natural sources of energy, suitable power sources may be coupled with the electrical generator drive which are rotated by the use, for example, of tidal powered, or wind-powered devices. Alternatively, other means of deriving energy from natural sources may comprise a power source which takes energy from the rise and fall of waves e.g. as disclosed in GB PS—1,601,467.

The preferred control means coupled with the reaction member, to vary the relative rotation between the reaction member and the other members of the epicyclic gear, comprises a linked arrangement of first and second hydraulic pump/motors. At least one of the pump/motors is of variable displacement, or variable and reversible displacement, and the arrangement of the pump/motors is such that the reaction member is coupled with one of them, so as to vary the speed of rotation, or speed and direction of rotation, respectively of the reaction member. In this manner, the necessary relative rotation between the reaction member and the other members of the epicyclic gear can be achieved, so as to maintain a substantially constant predetermined output speed of the output member when fluctuation occurs in the speed of the input member.

Other arrangements of control means may be provided, if desired. Thus, the reaction member of the epicyclic gear may be driven by a variable speed or reversible, variable speed electric or pneumatic motor.

The invention will now be described in more detail, by way of example only, with reference to embodiments thereof illustrated in the accompanying drawings, in which:—

Figure 1 is a schematic illustration of a power source from which a rotational input may be applied to apparatus according to the invention, the power source comprising a marine drive train having a prime mover, a propeller shaft and a gearbox coupling together the prime mover and the propeller shaft;

Figure 2 is a similar illustration of a marine drive train without a gearbox;

Figure 3 illustrates a wind turbine drive train which may serve as a power source for the apparatus;

Figure 4 is a schematic illustration of a variable ratio epicyclic gear, in a planetary arrangement, forming part of apparatus according to the invention;

Figure 5 is an illustration, similar to Figure 4, of an epicyclic gear in a star arrangement;

Figure 6 illustrates an epicyclic gear in a solar arrangement; and

Figure 7 is a schematic illustration of apparatus according to the invention, incorporated in the drive train of a ship, in order to generate constant frequency alternating current from a fluctuating rotational input from the drive train to the apparatus.

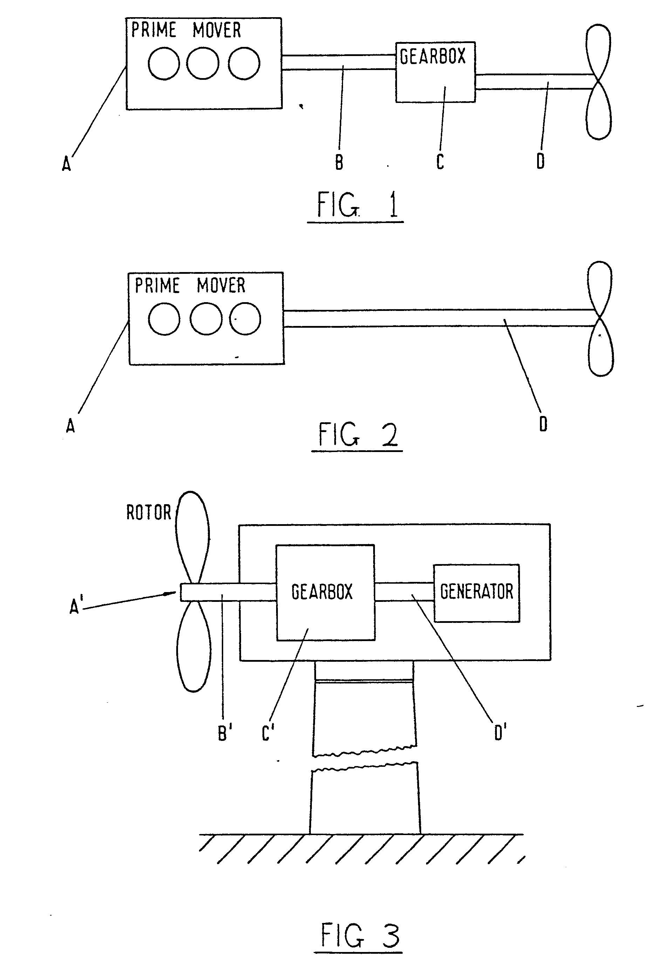

Referring now the drawings, Figures 1 and 2 show diagrammatically the basic layouts of conventional ship drive trains. Figure 1 shows a prime mover, e.g. a slow or medium speed diesel engine or turbine, driving the propeller via a reduction gearbox. Figure 2 shows a similar train in which the prime mover, e.g. a slow speed diesel engine, drives the propeller directly. In the drive train, shown in Figure 1, there are four possible power take-off points from which the apparatus may receive a fluctuating rotational input which are:—

A — From the non-used end of the prime mover drive shaft.

B — From the shaft between prime mover and gearbox.

C — From the gearbox.

D — From the propeller shaft.

In Figure 2, where there is no gearbox, points A and D only apply.

Figures 3 shows diagrammatically the drive train for an aerogenerator. The drive train comprises a wind turbine of variable speed coupled through the apparatus to a generator. The points of power source for the apparatus, equivalent to positions shown in Figure 1, are shown as $B^1$, $C^1$ and $D^1$, and are:—

$B^1$ In the shaft between rotor and gearbox
$C^1$ In the gearbox
$D^1$ In the gearbox output shaft.

In this case a second power take off from the rotor ($A^1$) (equivalent to position A in Figure 1) is not feasible.

An epicyclic gear consists of three basic elements which are the sun wheel, the carrier supporting a plurality of planetary pinions and an annulus gear; any one of these basic elements may act as the input member, a second may act as the output member and the third will become the reaction member of the epicyclic gear. In order that the ratio of the epicyclic gear, in whatever configuration it is arranged, may be varied, the reaction member may be caused to revolve in either sense of rotation or be held stationary i.e. the relative rotation between the reaction member and the other members of the epicyclic gear may be varied. Thus for a constant, say positive, input speed of rotation, the ratio of the epicyclic gear may be infinitely and steplessly varied within given limits by turning the reaction member from its maximum negative speed of roation, or vice versa through zero to its maximum positive speed of rotation.

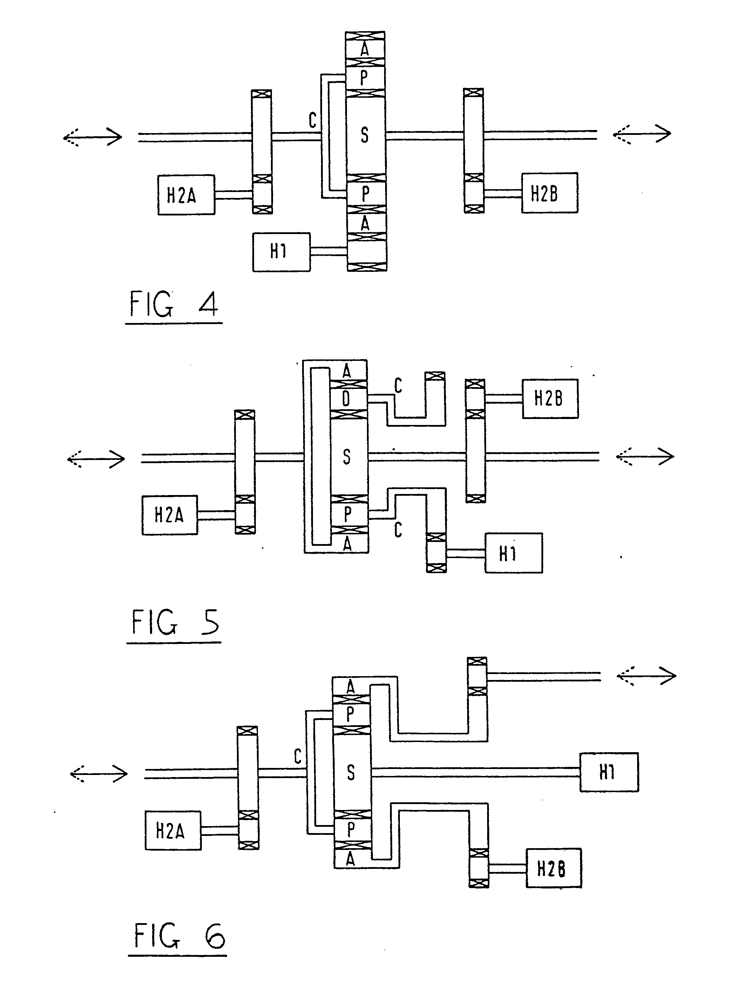

Figures 4, 5 and 6 show the basic planetary, star and solar epicyclic gear arrangement to achieve the variable-ratio gearing described in the preceding paragraph. In all of Figures 4, 5 and 6, solid arrows indicate the movement of power from left to right through the gear trains and this section of the specification is written on this basis; however, the power could equally well pass from right to left, as indicated by the dotted arrowheads. The elements of the epicyclic gear are marked for clarity as follows:—

S for sun wheel
P for planet pinion
C for the planet pinion carrier
A for the annulus wheel.

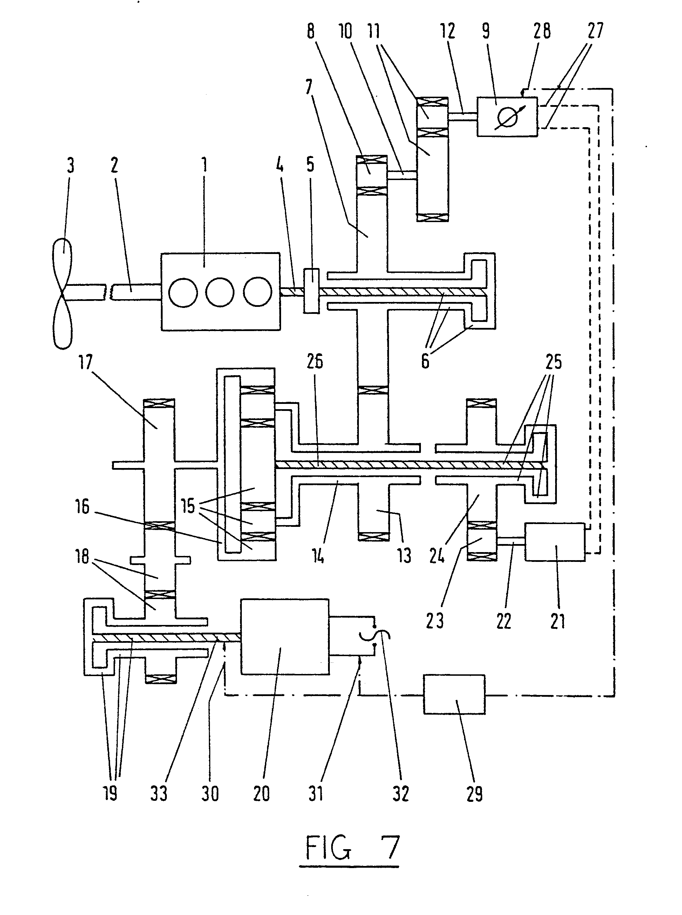

The reaction member of the epicyclic gear is the annulus wheel in the planetary arrangement (Figure 4), the planet carrier in the star arrangement (Figure 5), and the sun wheel in the solor arrangement (Figure 6). In each case, the reaction member is rotatably connected to a first hydraulic pump/motor H1, either directly as in Figure 6 or indirectly via gearing as in Figure 4 or indirectly via gearing and rotatable structural members as in Figure 5. Hydraulic pump/motors are usually used in pairs and in Figures 4, 5 and 6, the second hydraulic pump/motor may either be rotatably connected via gearing to the input shaft, where it is designated H2A, or to the output shaft where it is designated H2B. Hydraulic pump/motors H1 and either H2A or H2B would be interconnected by two pipes (not shown for clarity) thus forming a closed loop around which hydraulic fluid may be circulated by either one acting as a pump and causing the other to be operated as a motor. In the arrangement described, one of the pair of hydraulic pump/motors H1 or H2A (or H2B) would be fitted with a reversible, variable swash plate so that the quantity and direction of oil being circulated through the closed pipe loop and through the other of said pair of hydraulic pump/motors may be varied. By this means, the speed and sense of rotation of the reaction member may be varied infinitely between a given speed of anticlockwise rotation, through zero (i.e. stationary) to a given speed of clockwise rotation or vice versa. With such an arrangement and a constant speed drive to the input member, an infinitely variable speed may be obtained at the output member e.g. as in UK specification No. 1 097 253. The exact reverse of this is equally possible i.e. obtaining a constant speed output from a variable speed input and it is in this aspect of an epicyclic gear upon which the invention is based. It is, of course, also possible to obtain a variable speed output from a differently variable speed input, but the control problems in such a case are more complex.

The apparatus can receive a rotational input from a ships drive train at any point A, B, C, D in Figure 1, or A and D in Figure 2, or $B^1$, $C^1$, or $D^1$ in Figure 3, to drive at constant speed, a generator via a variable ratio epicyclic gear train. The power required to operate the coupled pair of hydraulic motors controlling the speed and sense of the rotation of the reaction member of the epicyclic gear is derived from the ships drive train. One hydraulic pump/motor, H1 is coupled directly to the reaction member, as in Figure 6, or via gearing to the reaction member as in Figures 4 and 5. The second hydraulic pump/motor can be coupled through gearing to the same point used to drive the generator, H2B of Figures 4, 5 and 6, or the input drive from the prime mover, H2A in Figures 4, 5 and6, or any other suitable point on the drive train.

Figure 7 shows one preferred embodiment by which the principle disclosed herein may be put into effect. A prime mover 1, for example a diesel engine, drives a propeller 3 via shaft 2. At the other end of the prime mover, power is taken via a shaft 4, a clutch or flexible coupling 5 and a cardan shaft/flexible coupling 6 to a gear wheel 7. A pinion 8 meshes with gear wheel 7 and drives hydraulic pump/motor 9 via shaft 10, step-up gearing 11 and shaft 12. A second gear wheel 13 also meshes with gear wheel 7. Gear wheel 13 is fast with a member 14 which also acts as the carrier C supporting the plurality of planetary pinions P of epicyclic gear 15; thus the planet carrier C forms the input member of epicyclic gear 15 which, in this embodiment, is operated in the Solar configuration.

The output member of epicyclic gear 15 is the annulus wheel A which is rotationally fast with a member 16. Gear wheel 17 is also rotationally fast with member 16 so that the output from epicyclic gear 15 passes via member 16 into gear wheel 17, thence via step-up gearing 18, cardan shaft/flexible coupling 19 and shaft 33 to generator 20. The ratio of epicyclic gear 15 may be varied by controlled rotation of the sun wheel S. The speed and directin of rotation of the sun wheel S may be controlled by hydraulic pump/motor 21 which drives, via shaft 22, a pinion 23 meshing with gear wheel 24. Flexible coupling/cardan shaft 25 is rotationally fast with gear wheel 24 to transmit the drive via shaft 26 into sun wheel S. Shaft 26 is co-axial with gear wheels 24 and 13 and member 14. Hydraulic pump/motor 21 is connected via piping 27 to pump/motor 9 to form a pair, of which one would have a fixed displacement and the other would have the reversible variable displacement swash plate.

Flexible couplings/cardan shafts 6, 19 and 25 are typical of the sort of arrangements used to rotatably connect fixed members. Other types of coupling are equally possible. Also, a clutch which may be located in member 5 could equally well be located in the position of members 6, 19 or 25.

A control unit 29 is fed with an input signal which could either be a direct measure of the speed of rotation 30 of generator drive shaft 33 (or some other suitable shaft) or some property dependent upon the speed of rotation of generator shaft 33, e.g. the frequency 31 of the alternating current 32 generated. Control unit 29 would compare the value of input signal 30 or 31 with the value stored in its memory and, if it differed by more than a defined amount, would produce an output signal 28 to alter the setting of the swash plate on hydraulic pump/motor 9. This action would cause the flow of hydraulic fluid in pipes 27 to change so that speed of rotation (and possibly the direction of rotation as well) of pump/motor 21 would also change resulting in a new speed and/or direction of rotation of sun wheel S of epicyclic gear 15. The new conditions now prevailing in the epicyclic gear 15 should restore the original speed of rotation of annulus wheel A and hence of generator shaft 33.

It will be noted that gear wheels 7 and 13, the configuration of epicyclic gear 15 and gear wheels 17 and 18 all give step-up ratios so that the speed of rotation gradually increases from, say, 65—100 RPM for a direct drive diesel engine or 400—800 RPM for a medium speed diesel engine driving through a gearbox to the 1200 or 1800 RPM required for a marine generator generating 60 Hz current. If the prime mover was a turbine operating at tens of thousands of revolutions per minute, the gear wheels 7, 13, epicyclic gear 15 and gear wheels 17 and 18 would have step-down ratios.

In a typical case, engine 1 may have a fuel efficient cruising speed of, say, P RPM and the gear ratios through the train would be so chosen that the correct alternator speed would be achieved with the reaction member of the epicyclic gear 15, i.e. sun wheel S, not rotating. This would mean that pump/motor 21 was not rotating and that the swash plate of pump/motor 9 was set to zero so that no hydraulic fluid flowed in pipes 27.

Consider now that the speed of prime mover 1 fell below P RPM. The whole train would slow down and input signal 30 or 31 would depart from the pre-set value stored in the memory of control unit 29. This would cause control unit 29 to generate an output signal 28 dependent in magnitude on the difference between input signal 30 or 31 and the pre-set value stored in the memory. Output signal 28 would cause the swash plate control on pump/motor 9 to be moved by an appropriate means, e.g. a Servo mechanism (not shown) to, say, a positive setting. This would cause pump/motor 9 to act as a pump and cause hydraulic fluid to flow along pipes 27 thus making pump/motor 21 act as a motor and turn sun wheel S in a positive direction via the drive train consisting of members 22, 23, 24, 25 and 26. Thus there would be rotational input to epicyclic gear 15 via both sun wheel S and planet carrier C so that the speed of annulus wheel A would rise, as would the speeds of members 16, 17, 18, 19 and 33 thus restoring the speed of generator 20 to its former level and input signal 30 or 31 to the pre-set value stored in the memory of control unit 29. Having thus restored the input signal 30 or 31 to its preset value, the setting of the swash plate unit would remain fixed in that position until a further change in the speed of prime mover 1 occurred.

In the case just described, there are two power paths to the epicyclic gear 15 which are:—

(i) direct power *into* the planet carrier C via the mechanical path formed by members 4, 5, 6, 7, 13 and 14.

(ii) indirect power *into* the sun wheel S via the two hydraulic pump/motors 9,21 and interconnecting piping 27 in a non-mechanical path.

Both the above paths put power into the epicyclic gear 15 the output from which, via annulus gear A, drives the generator.

If the speed of prime mover 1 now rises to a value greater than P RPM, the whole train will speed up accordingly and input signal 30 or 31 would again depart from its pre-set value as stored in the memory of control unit 29. In this instance the sign of the difference between the magnitudes of input value 30 or 31 and the value in the memory would be different to that previously so that the output signal 28 generated by control unit 29 would cause the setting of the swash plate of pump/motor 9 to be moved to a negative position. Thus, hydraulic fluid will flow in the opposite direction along pipes 27 and pump/motor 21 and sun wheel S of epicyclic gear 15 will both rotate in the negative sense. In this case, pump/motor 21 would act as a pump and pump/motor 9 would act as the motor. Here the two power paths to the epicyclic gear become:—

(i) direct power *into* the planet carrier C via the mechanical path formed by members 4, 5, 6, 7, 13 and 14.

(ii) indirect power *out of* the sun wheel S via the two hydraulic pump/motors 9, 21 and interconnecting piping 27 in a non-mechanical path. In this case, power is passed into the epicyclic gear 15 via the planet carrier C and out via the annulus gear A to drive the generator, with the excess power being removed via the sun wheel S. Thus a partial power recirculation loop is set up via members 15S, 26, 25, 24, 23, 22, 21, 27, 9, 12, 11, 10, 8 back to gear wheel 7.

It is also possible to use a hydraulic pump/ motor 9 with only a variable swash plate i.e. not a reversible one. In this case, the swash plate of pump/motor 9 could be set to an intermediate point of its travel when prime mover 1 was operating at its cruising speed of P RPM. If the speed of the prime mover fell below P RPM, the angle of the swash plate of pump/motor 9 would be increased so that the speed of pump-motor 21, and hence also of sun wheel 15S, would increase to compensate for the reduction in speed of member 14. Conversely, if the speed of the prime mover rose above P, the angle of the swash plate or pump/motor 9 would be reduced to reduce the speed of pump/motor 21 and sun wheel 15S. When a non-reversible swash plate pump/motor 9 is used, power is always put into epicyclic gear 15 via both the mechanical and hydraulic paths and no power re-circulation loop is possible.

As the power carrying capacity of hydraulic pump/motors is limited, installations for the generation of substantial quantities of electrical power would be likely to prefer a reversible variable swash plate hydraulic pump/motor 9, so that only a minimum amount of power would be transmitted in the non-mechanical path.

Though the embodiment shown in Figure 7 may at first sight seem complicated, the arrangement is designed for high reliability and easy access for maintenance in the confined space of a ship's engine room. Further reductions of space and increase in reliability may be obtained if the power in epicyclic gear 15 is carried uniformly by all the planetary pinions P. This can be achieved by the use of load sharing elements to support the planetary pinions P from the planet carrier C such as flexible pins as disclosed in more detail in U.K. Patent Specification 1,101,131.

The purpose of this disclosure is to so control the speed of the reaction member of epicyclic gear 15 so that a constant speed output may be obtained. This control has been described using hydraulic means, but could equally well be performed by a variable speed or reversible and variable speed electric or pneumatic motor.

Although not illustrated, natural power sources may be used to drive the apparatus which have fluctuating outputs, such as air or wind-driven devices, water driven devices, and devices which take energy from wave-motion as described for example in U.K. Patent Specification No. 1,601,467.

## Claims

1. An electrical generator drive comprising a power source (1) to transmit power at a roational speed which may fluctuate substantially in service, an electrical generator (20) which requires a rotational input of power at a substantially constant speed, and a controllable drive transmission (4, 5, 6, 7, 13, 14) coupling together the power source (1) and the electrical generator (20), said drive transmission comprising:

an epicyclic gear (15) having an input member (13, 14) which is arranged to be driven by said power source (1), an output member (16) coupled with said electrical generator (20), and a reaction member (S);

monitoring means (29) arranged to respond to fluctuations from a predetermined value in the rotational speed of the output member (16);

and control means including a hydraulic pump/ motor unit (21) coupled with said reaction member (S) and controllable by the monitoring means (29) in order to vary the relative rotation between the reaction member (S) and the other members (14, 16) of the epicyclic gear so as to maintain a substantially constant predetermined speed of the output member (16); characterised in that:

the monitoring means includes a control unit (29, 9) having a memory storable with a predetermined value corresponding to the predetermined speed of the output member (16), means for feeding to the control unit an input signal (30, 31) which represents the actual speed of the output member (16) and which the control unit compares with the predetermined value in order to determine whether a fluctuation has occurred from the required predetermined speed of the output member (16), and a control line (27) from the control unit (9) to said pump/motor unit (21) via which the control unit controls the operation of the pump/motor unit (21) to cause alteration in the relative rotation of the reaction member (S), when a fluctuation occurs in the speed of the output member, and so as to restore the speed of the output member to the predetermined speed; and

the drive transmission also includes at least one flexible coupling (6, 19, 25) for torsionally absorbing at least part of any speed fluctuation imparted to the drive transmission via the power source (1) and the input member (13, 14).

2. An electrical generator drive according to claim 1, characterised in that the power source is the prime mover (1) of a marine vessel.

3. An electrical generator drive according to claim 2, characterised in that the drive transmission comprises an input shaft (4) which is coupled with the prime mover (1), a cardan shaft (6) coupled with the input shaft (4) via a first flexible coupling (5), a gear wheel (7) rotatable with the cardan shaft (6) and coupled with the input member (13, 14) of the epicyclic gear (15), a further gear wheel (17) rotatable with the output member (16) of the epicyclic gear (15), and a further cardan shaft (19) arranged to drive the electrical generator (20) and coupled with said further gear wheel (17).

4. An electrical generator drive according to any one of claims 1 to 3, characterised in that the electrical generator (20) is an A.C. generator, and the monitoring means (29) is arranged to monitor the frequency (31) of the A.C. generator.

5. An electrical generator drive according to any one of claims 1 to 4, characterised in that the control means comprises a linked pair of first and second hydraulic pump/motors (9, 21) one of which (9) is of variable displacement, and said first pump/motor (9) being arranged to be driven directly by the drive transmission (4, 5, 6, 7, 8, 10, 11, 12) and said second pump/motor (21) being coupled with said reaction member (S) of the epicyclic gear (15), and in that said monitoring means (29) is operable to control the setting of the variable displacement pump/motor (9) so that said second pump/motor (21) can vary the relative rotation between the reaction member (S) and the other members (14, 16) of the epicyclic gear (15) and thereby maintain the substantially constant predetermined output speed of the output member (16), when fluctuation occurs in the speed of the input member (13, 14).

6. An electrical generator drive according to claim 1, characterised in that the power source comprises a fluid-driven device.

7. An electrical generator drive according to claim 6, characterised in that the fluid-driven device comprises a rotary wind-driven device.

8. An electrical generator drive according to claim 6, characterised in that the fluid-driven device comprises a rotary liquid-driven device.

**Revendications**

1. Entraînement de générateur électrique comprenant une source d'énergie (1) pour transmettre l'énergie avec une vitesse de rotation qui peut varier de façon notable en service, un générateur électrique (20) qui nécessite une entrée d'énergie par rotation avec une vitesse pratiquement constante, et une transmission d'entraînement (4, 5, 6, 7, 13, 14) pouvant être commandée accouplant ensemble la source d'énergie (1) et le générateur électrique (20), ladite transmission d'entraînement comprenant: un train épicycloïdal (15) ayant un organe d'entrée (13, 14) qui est agencé pour être entraîné par ladite source d'énergie (1), un organe de sortie (16) couplé audit générateur électrique (20), et un organe de réaction (S); un dispositif de contrôle (29) agencé pour répondre à des variations de la vitesse de rotation de l'organe de sortie (16) à partir d'une valeur prédéterminée; et un dispositif de commande comprenant un ensemble hydraulique pompe/moteur (21) couplé audit organe de réaction (S) et pouvant être commandé par le dispositif de contrôle (29) afin de faire varier la rotation relative entre l'organe de réaction (S) et les autres organes (14, 16) du train épicycloïdal afin de maintenir à l'organe de sortie (16) une vitesse prédéterminée pratiquement constante; caractérisé en ce que: le dispositif de contrôle comprend un ensemble de commande (29, 9) ayant une mémoire pouvant être chargée avec une valeur prédéterminée qui correspond à la vitesse prédéterminée de l'organe de sortie (16), des moyens pour appliquer à l'ensemble de commande un signal d'entrée (30, 31) qui représente la vitesse réelle de l'organe de sortie (16) et que l'ensemble de commande compare avec la valeur prédéterminée afin de déterminer si une variation s'est produite à partir de la vitesse prédéterminée nécessaire de l'organe de sortie (16), et un conduit (27) de commande à partir de l'ensemble (9) de commande audit ensemble pompe/moteur (21) par la quelle l'ensemble de commande commande le fonctionnement de l'ensemble pompe/moteur (21) pour provoquer une modification de la rotation relative de l'organe de réaction (S) lorsqu'une variation de la vitesse de l'organe de sortie se produit, et de façon à rétablir la vitesse de l'organe de sortie à la vitesse prédéterminée; et en ce que la transmission d'entraînement comprend également au moins un accouplement souple (6, 19, 25) pour absorber en torsion au moins une partie de toute variation de vitesse appliquée à la transmission d'entraînement par l'intermédiaire de la source d'énergie (1) et de l'organe d'entrée (13, 14).

2. Entraînement de générateur électrique suivant la revendication 1, caractérisé en ce que la source d'énergie est la machine motrice (1) d'un navire marin.

3. Entraînement de générateur électrique suivant la revendication 2, caractérisé en ce que la transmission d'entraînement comprend un arbre d'entrée (4) qui est couplé à la machine motrice (1), un arbre à cardan (6) couplé à l'arbre d'entrée (4) par un premier accouplement souple (5), un pignon (7) rotatif avec l'arbre à cardan (6) et couplé à l'organe d'entrée (13, 14) du train épicycloïdal (15), un autre pignon (17) rotatif avec l'organe de sortie (16) du train épicycloïdal (15), et un autre arbre à cardan (19) agencé pour entraîner le générateur électrique (20) et couplé audit autre pignon (17).

4. Entraînement de générateur électrique suivant l'une quelconque des revendications 1 à 3, caractérisé en ce que le générateur électrique (20) est un générateur de courant alternatif, et le dispositif de contrôle (29) est agencé pour contrôler la fréquence (31) du générateur de courant alternatif.

5. Entraînement de générateur électrique suivant l'une quelconque des revendications 1 à 4, caractérisé en ce que le dispositif de commande est constitué par une paire d'un premier et d'un second ensembles hydrauliques pompe/moteur (9, 21) couplés, dont l'un (9) est du type à cylindrée variable et ledit premier ensemble hydraulique pompe/moteur (9) étant agencé pour être entraîné directement par la transmission d'entraînement (4, 5, 6, 7, 8, 10, 11, 12) et ledit second ensemble pompe/moteur (21) étant couplé audit organe de réaction (S) du train épicycloïdal (15), et en ce que le dispositif de contrôle (29) peut fonctionner pour commander le réglage de l'ensemble pompe/moteur (9) à cylindrée variable de façon que ledit second ensemble pompe/moteur (21) puisse faire varier la rotation relative entre l'organe de réaction (S) et les autres organes (14, 16) du train épicycloïdal (15) et maintenir ainsi la vitesse de sortie prédéterminée à peu près constante de l'organe de sortie (16) lorsqu'une variation se produit dans la vitesse de l'organe d'entrée (16, 14).

6. Entraînement de générateur électrique suivant la revendication 1, caractérisé en ce que la source d'énergie est constituée par un dispositif entraîné par fluide.

7. Entraînement de générateur électrique suivant la revendication 6, caractérisé en ce que le dispositif entrainé par fluide est constitué par un dispositif rotatif entraîné par le vent.

8. Entraînement générateur électrique suivant la revendication 6, caractérisé en ce que le dispositif entraîné par fluide est constitué par un dispositif rotatif entraîne par un liquide.

## Patentansprüche

1. Elektrischer Generatorantrieb mit einer Energiequelle (1) zum Übertragen von Energie bei einer Rotationsgeschwindigkeit, die bei Betrieb wesentlich schwanken kann, einem elektrischen Generator (20), der die Eingabe von Drehenergie mit im wesentlichen konstanter Geschwindigkeit erfordert, und einer steuerbaren Antriebsübertragung (4, 5, 6, 7, 13, 14), die die Energiequelle (1) und den elektrischen Generator (20) miteinander koppelt und folgende Elemente umfaßt:

— ein epizyklisches Getriebe (15) mit einem von der Energiequelle (1) angetriebenen Eingangsteil (13, 14), einem mit dem elektrischen Generator (20) gekoppelten Ausgangsteil (16) und einem Rückwirkungsteil (S),

— eine Überwachungsvorrichtung (29), die auf Schwankungen der Rotationsgeschwindigkeit des Ausgangsteils (16) gegenüber einem vorbestimmten Wert reagiert, und

— eine Steuervorrichtung, die eine hydraulische Pumpen/Motoreinheit (21) aufweist, welche mit dem Rückwirkungsteil (S) gekoppelt und von der Überwachungsvorrichtung (29) steuerbar ist, um die Relativdrehung zwischen dem Rückwirkungsteil (S) und den anderen Teilen (14, 16) des epizyklischen Getriebes (15) derart zu variieren, daß eine im wesentlichen konstante vorbestimmte Geschwindigkeit des Ausgangsteils (16) beibehalten wird, dadurch gekennzeichnet, daß

— die Überwachungsvorrichtung eine Steuereinheit (29, 9) mit einem Speicher, in dem ein der vorbestimmten Geschwindigkeit des Ausgangsteils (16) entsprechender vorbestimmter Wert speicherbar ist, eine Einrichtung, die der Steuereinheit ein die Istgeschwindigkeit des Ausgangsteils (16) darstellendes Eingangssignal (30, 31) zuführt, welches die Steuereinheit mit dem vorbestimmten Wert vergleicht, um festzustellen, ob eine Schwankung gegenüber der vorbestimmten Sollgeschwindigkeit des Ausgangsteils (16) eingetreten ist, und eine von der Steuereinheit (9) zu der Pumpen/Motoreinheit (21) führende Steuerleitung (27) über die die Steuereinheit den Betrieb der Pumpen/Motoreinheit (21) steuert, um eine Veränderung der Relativdrehung des Rückwirkungsteils (S) zu bewirken, wenn eine Schwankung der Geschwindigkeit des Ausgangsteils auftritt, und um so die Geschwindigkeit des Ausgangsteils (16) wieder auf die vorbestimmte Geschwindigkeit zu bringen, enthält, und

— die Antriebsübertragung außerdem mindestens eine flexible Kupplung (6, 19, 25) aufweist, die etwaige Geschwindigkeitsschwankungen, die der Antriebsübertragung über die Energiequelle (1) und das Eingangsteil (13, 14) erteilt werden, mindestens zum Teil torsionsmäßig absorbiert.

2. Elektrischer Generatorantrieb nach Anspruch 1, dadurch gekennzeichnet, daß die Energiequelle der Antriebsmotor (1) eines Schiffskörpers ist.

3. Elektrischer Generatorantrieb nach Anspruch 2, dadurch gekennzeichnet, daß die Antriebsübertragung eine mit dem Antriebsmotor (1) verbundene Eingangswelle (4), eine über eine erste flexible Kupplung (5) mit der Eingangswelle (4) verbundene Kardanwelle (6), ein mit der Kardanwelle (6) drehbares und mit dem Eingangsteil (13, 14) des epizyklischen Getriebes (15) gekoppeltes Getrieberad (7), ein weiteres mit dem Ausgangsteil (16) des epizyklischen Getriebes (15) drehbares Getrieberad (17) und eine weitere den elektrischen Generator (20) antreibende und mit dem weiteren Getrieberad (17) gekoppelte Kardanwelle (19) aufweist.

4. Elektrischer Generatorantrieb nach einem der Ansprüche 1 bis 3, dadurch gekennzeichnet, daß der elektrische Generator (20) ein Wechselstromgenerator ist und die Überwachungsvorrichtung (29) die Frequenz (31) des Wechselstromgenerators überwacht.

5. Elektrischer Generatorantrieb nach einem der Ansprüche 1 bis 4, dadurch gekennzeichnet, daß die Steuervorrichtung ein hydraulisches Pumpen/ Motor-Paar (9, 21) aus einer bzw. einem ersten und einer bzw. einem zweiten Pumpe/Motor aufweist, von denen eine(r) (9) vom variablen Verdrängertyp ist und die bzw. der erste Pumpe/ Motor (9) direkt von der Antriebsübertragung (4, 5, 6, 7, 8, 10, 11, 12) antreibbar ist, und der bzw. die zweite Pumpe/Motor (21) mit dem Rückwirkungsteil (S) des epizyklischen Getriebes (15) gekoppelt ist, und daß die Überwachungsvorrichtung (29) die Einstellung der Pumpe (9) bzw. des Motors (9) vom variablen Verdrängertyp so steuert, daß die bzw. der zweite Pumpe/Motor (21) die Relativdrehung zwischen dem Rückwirkungsteil (S) und den anderen Teilen (14, 16) des epizyklischen Getriebes (15) verändern kann und dadurch die im wesentlichen konstante vorbestimmte Ausgangsgeschwindigkeit des Ausgangsteils (16) beibehalten kann, wenn eine Schwankung der Geschwindigkeit des Eingangsteils (13, 14) eintritt.

6. Elektrischer Generatorantrieb nach Anspruch 1, dadurch gekennzeichnet, daß die Energiequelle eine fluidgetriebene Vorrichtung aufweist.

7. Elektrischer Generatorantrieb nach Anspruch 6, dadurch gekennzeichnet, daß die fluidgetriebene Vorrichtung eine windangetriebene Rotationsvorrichtung aufweist.

8. Elektrischer Generatorantrieb nach Anspruch 6, dadurch gekennzeichnet, daß die fluidgetriebene Vorrichtung eine flüssigkeitsangetriebene Rotationsvorrichtung aufweist.

8

0 058 037

FIG. 1

FIG 2

FIG 3

1

FIG 4

FIG 5

FIG 6

FIG 7